# EUROPEAN PATENT APPLICATION

(11) **EP 0 716 243 A1**
(43) Date of publication of application: **12.06.1996**
(21) Application number: 95119043.8
(22) Date of filing: 04.12.1995
(51) Int. Cl.: F16D 35/02

(54) **Fluid coupling device and shaft mounting arrangement therefor**

(30) Priority: 07.12.1994 US 350940
(71) Applicant: EATON CORPORATION, Cleveland, Ohio 44114-2584 (US)
(72) Inventor: Barnum, Stephen Theodore, Portage, Michigan 49002 (US)
(74) Representative: Schwan, Gerhard, Dipl.-Ing.

(57) **Abstract**

A fluid coupling device is disclosed of the type including an input coupling member (11) and an output coupling assembly (13). The input coupling member is mounted on an input shaft (21) which includes an enlarged annular portion (51) having a cylindrical outer surface (53) on which is pressed an inner race (55) of a set of bearing members (59). The enlarged portion (51) also defines a set of internal threads (67), and an outer surface (65) which may be engaged by a tool such as a wrench (T) to thread the input shaft into threaded engagement with external threads (69) of a drive shaft (S). Having the internally threaded portion (51) disposed at least partially within, or in the plane of the bearing set substantially reduces the overall, assembled axial length of the fluid coupling device, and reduces the radial excursion thereof from the nominal axis of rotation (A).

## Description

### BACKGROUND OF THE DISCLOSURE

The present invention relates to fluid coupling devices, and more particularly, to such devices which are mounted on externally-threaded hubs or shafts.

Fluid coupling devices of the type to which the present invention relates are typically utilized as radiator cooling fans on vehicles equipped with internal combustion engines.

Conventionally, such fluid couplings have included an output coupling member defining a fluid chamber, an input coupling member rotatably disposed within the fluid chamber, and a quantity of viscous fluid contained in the chamber, such that rotation of the input coupling member transmits torque to the output coupling member by means of viscous shear stress. The input coupling member is typically mounted on an input shaft, with the opposite end (input end) of the input shaft attached to some type of drive member such as a flange associated with the engine water pump, or a pulley driven by the engine crankshaft.

It has been common practice in the art to provide ample axial separation between the fluid coupling and the drive member, to facilitate access to the bolts and nuts used to attach the input shaft flange to the pulley. However, during the 1970's, as the trend toward compact and subcompact vehicles developed, it became necessary to reduce the size of many of the engine accessory components, and especially the axial dimensions thereof. This was also true of fluid couplings used to drive vehicle radiator cooling fans.

More recently, many fluid coupling devices (fan drives) for driving radiator cooling fans have been either "crank-mounted" or water-pump mounted, but in either case, are mounted on an externally-threaded shaft or hub. Although the present invention is not limited to either crank-mounted or water-pump mounted fluid coupling devices, the invention is especially advantageous in those environments, and will be described in connection therewith.

The attempts at shortening the overall axial length of the fluid coupling and mounting arrangement have included those illustrated in U.S. Patent Nos. 4,073,370 and 4,190,139, assigned to the assignee of the present invention and incorporated herein by reference. The assembly arrangement shown in the cited patents includes an internally-threaded, hexagonal, enlarged portion formed integrally with the input shaft, but with the internally-threaded portion being disposed wholly outside (rearward) the fluid coupling. At the time of engine assembly, the internally-threaded portion is threaded onto an externally-threaded hub or crankshaft extension. This arrangement permits assembly and disassembly of a fluid coupling by turning the enlarged, hexagonal portion, such as by means of a large open end or adjustable wrench.

Although the arrangement shown in the cited patents has been generally satisfactory and is still in commercial use as of the filing date of the present application, and does reduce the overall length of the fan drive assembly, there are now certain vehicle applications in which it is necessary to further reduce the overall axial length of the fan drive arrangement by an additional half inch or more.

### SUMMARY OF THE INVENTION

Accordingly, it is an object of the present invention to provide an improved fluid coupling device and shaft-mounting arrangement therefor which further substantially reduces the overall axial length of the fan drive installation, but which still typically requires no sophisticated tools to effect assembly and disassembly of the fluid coupling device and the externally-threaded shaft.

It is a further object of the present invention to provide such an improved shaft-mounting arrangement for a fluid coupling device which accomplishes the above-stated object, but which does not require substantial redesign of most of the coupling device.

The above and other objects of the invention are accomplished by the provision of an improved fluid coupling device adapted to be mounted on an externally-threaded hub or drive shaft and rotatably driven thereby, the drive shaft providing the sole input drive to the fluid coupling device, the fluid coupling device being of the type comprising a first rotatable coupling assembly defining an axis of rotation and a fluid chamber. A second rotatable coupling member is disposed in the fluid chamber and is rotatable relative to the first coupling assembly and cooperates therewith to define a viscous shear chamber therebetween, whereby torque is transmitted from the second coupling member to the first coupling assembly in response to the presence of viscous fluid in the viscous shear space. An input shaft is operable to transmit input torque from the drive shaft to the second coupling member. The first coupling assembly includes a housing member rotatably supported relative to the input shaft by means of a bearing set, the input shaft including an internally-threaded portion in threaded engagement with the externally threaded drive shaft.

The improved fluid coupling device is characterized by the internally-threaded portion of the input shaft including a first exterior surface portion on which is disposed the bearing set, and a second exterior portion adapted for engagement by a tool operable to effect threaded engagement of the internally threaded portion and the externally threaded drive shaft.

### BRIEF DESCRIPTION OF THE DRAWINGS

**FIG. 1** is an axial cross-section, partly in exterior plan view, of a typical fluid coupling device of the type with which the present invention may be utilized, and including the present invention.
**FIG. 2** is an enlarged, fragmentary, rear plan view, taken on line 2-2 of FIG. 1, and illustrating one aspect of the present invention.
**FIG. 3** is a further enlarged, fragmentary, axial cross-section, similar to FIG. 1, illustrating the assembly of the fluid coupling device of the present invention.

### DESCRIPTION OF THE PREFERRED EMBODIMENT

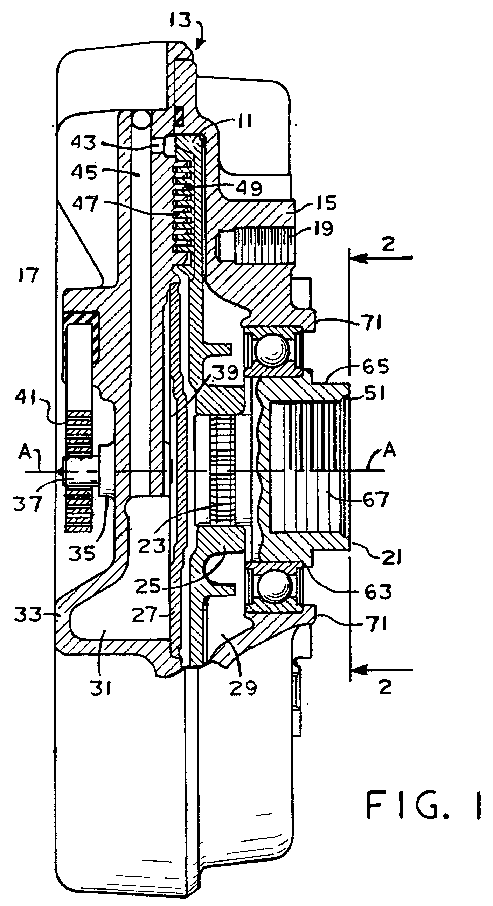

Referring now to the drawings, which are not intended to limit the invention, FIG. 1 illustrates one preferred form of a fluid coupling device (viscous fan drive) of the type with which the present invention may be utilized. The fluid coupling device illustrated in FIG. 1 includes an input coupling member, generally designated 11, and an output coupling assembly, generally designated 13. By way of example only, the output coupling assembly 13 includes a die cast housing member 15 and a die cast cover member 17, the members 15 and 17 being secured together by a rollover of the outer periphery of the cover member 17, as is well known in the art. The fluid coupling device is adapted to be driven by a liquid cooled engine and, in turn, drives a radiator cooling fan, neither the engine nor the fan being shown herein. The fan may be attached to the housing member 15 by means of a plurality of threaded openings 19 (only one of which is shown in FIG. 1). It will be understood, however, that the use of the present invention is not limited to any particular configuration of fluid coupling device or to any particular application thereof, except as is specifically noted hereinafter.

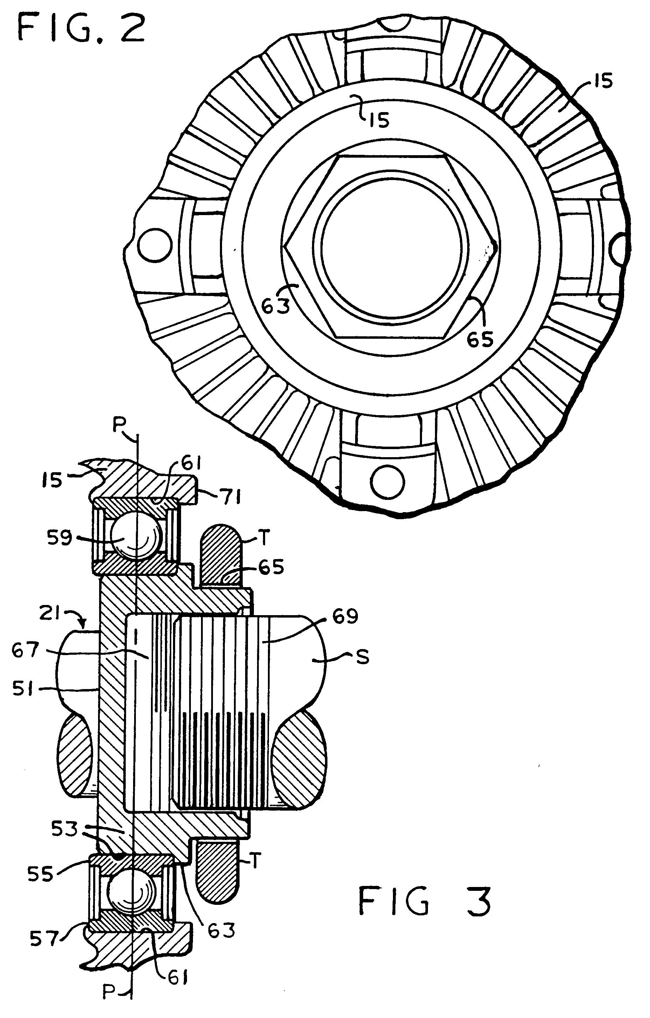

The fluid coupling device includes an input shaft generally designated 21 on which the input coupling member 11 is mounted. The input shaft 21 is rotatably driven by means of an externally threaded drive shaft S, which is shown only in FIG. 3, and then only fragmentarily. It should be understood that the particular configuration of the drive shaft S forms no part of the present invention, and the shaft S illustrated in FIG. 3 is included simply to show the environment in which the present invention would be utilized. The forward end (left end in FIG. 1) of the input shaft 21 has an interference fit between a serrated portion 23 and an opening defined by a hub portion 25 of the input coupling member 11. As a result, rotation of drive shaft S causes rotation of the input shaft 21, which, in turn, causes rotation of the input coupling member 11.

The housing member 15 and the cover member 17 cooperate to define a fluid chamber which is separated, by means of a circular valve plate 27, into a fluid operating chamber 29 and a fluid reservoir chamber 31. Thus, the input coupling member 11 is disposed within the fluid operating chamber 29 and is able to transmit torque to the output coupling assembly 13 in response to the presence of viscous fluid within the operating chamber 29.

The cover member 17 defines a raised, annular reservoir-defining portion 33 which is disposed to be generally concentric about an axis of rotation A of the device, and further defines a generally cylindrical shaft support portion 35. Rotatably disposed within the shaft support portion 35 is a valve shaft 37 extending outwardly (to the left in FIG. 1). Attached to the inner end (right end in FIG. 1) of the valve shaft 37 is a valve arm 39, which may be better understood by reference to U.S. Patent No. 4,974,712, assigned to the assignee of the present invention and incorporated herein by reference. As is well-known to those skilled in the art, movement of the valve arm 39 controls the flow of fluid from the reservoir chamber 31 to the operating chamber 29 through a fill opening (not shown) formed in the valve plate 27.

Operatively associated with the outer end of the valve shaft 37 is a temperature-responsive bi-metal element, comprising a coil member 41, which includes an inner end portion in engagement with the valve shaft 37. The manner in which the bi-metal coil member 41 operates to control the movement of the valve arm 39, in response to variations in a predetermined temperature condition is well known in the art, is not an essential feature of the present invention, and will not be described further herein.

The cover member 17 defines an axial passage 43 in communication with the fluid operating chamber 29, and a generally radial passage 45, which provides fluid communication from the axial passage 43 to the fluid reservoir chamber 31. As would be apparent to those skilled in the art, the "radial" passage 45 is not truly radial, and does not pass through the axis of rotation A of the coupling device, but is somewhat offset therefrom, so as not to interfere with the valve shaft 37, which is concentric with the axis of rotation A. The means by which fluid is pumped from the operating chamber back into the reservoir chamber in response to slip speed (i.e., the difference in rotational speed between the input coupling member 11 and the output coupling assembly 13) is also well known in the art, is not an essential feature of the present invention, and will not be described further herein.

In the subject embodiment of the invention, the input coupling member 11 includes a forward surface which defines a plurality of annular lands 47. The adjacent surface of the cover member 17 forms a plurality of annular lands 49. The annular lands 47 and 49 are interdigitated to define a serpentine-shaped viscous shear space therebetween. It is believed that in view of the above-incorporation of the cited patents, those skilled in the art can fully understand the construction and operation of the fluid coupling device illustrated in FIG. 1.

Referring now to FIGS. 2 and 3, in conjunction with FIG. 1, the improved fluid coupling device and shaft mounting arrangement of the present invention will be described. The input shaft 21 includes an enlarged, generally annular portion 51 disposed rearwardly of the serrated portion 23. The enlarged portion 51 includes a generally cylindrical portion 53, the exterior surface thereof also being referred to by the reference numeral "53". Disposed on the cylindrical portion 53 is an inner race 55 of a bearing set, which also includes an outer race 57, and a plurality of ball bearing members 59 disposed between the inner race 55 and outer race 57. Preferably, the inner race 55 is pressed onto the cylindrical surface 53, while the outer race 57 is pressed into a cylindrical interior surface 61 of the body member 15.

The enlarged annular portion 51 of the input shaft 21 also includes a narrow, radially extending flange 63 which engages the rearward surface of the inner race 55, thereby preventing relative axial motion of the input shaft 21 in a forward direction (to the left in FIG. 1).

Finally, the enlarged annular portion 51 includes a generally hexagonal outer surface 65, disposed rearwardly of the flange 63, and therefore, rearwardly of the rest of the fluid coupling device. Although not an essential feature of the present invention, the hexagonal surface 65 is preferred as a means of achieving assembly or disassembly of the input shaft 21 and the drive shaft S, as will be described subsequently. The enlarged annular portion 51 defines a set of internal threads 67, selected for mating, threaded engagement with a set of external threads 69 defined by the drive shaft S.

It is an important feature of the present invention that the overall, installed axial length of the fan drive and drive shaft S may be substantially reduced with only a very minor redesign of the input coupling member 11, a fairly minor redesign of the housing member 15, and the only major redesign being that of the input shaft 21.

Referring now primarily to FIGS. 2 and 3, the housing member 15 defines a rearward surface 71, and it is one important aspect of the present invention that the only portion of the input shaft 21 which lies rearwardly (to the right in FIGS. 1 and 3) of the rearward surface 71 is the hexagonal outer surface 65. As a result of this feature of the present invention, the overall, installed axial length of the fan drive can be minimized, as will be explained subsequently.

In accordance with another important aspect of the present invention, the forward end (left end in FIG. 3) of the internal threads 67 lies immediately adjacent an imaginary plane P which passes through the ball bearing members 59. It should be understood that the forward end of the threads 67 could, within the scope of the present invention, lie in the imaginary plane P, or slightly forward thereof, or slightly rearward thereof. Preferably, however, the external threads 69 should extend axially into the axial region defined by the bearing race 55, in order to obtain the maximum benefit of the invention. It is believed that one additional benefit of the arrangement of the present invention, in addition to the reduction in overall axial length of the fan drive, is that the connection or coupling (by means of the threads 67 and 69) of the drive shaft S and the input shaft 21 lies closer, axially, to the plane P defined by the bearing members 59. As a result, there will be a reduced radial excursion (i.e., radial deviation from the axis of rotation A) by the fan drive.

Referring now primarily to FIG. 3, in which the external threads 69 have been threaded only part of the way into the internal threads 67, the assembly of the fluid coupling device to the drive shaft S will be described. As mentioned previously, it is not essential for the outer surface 65 to be hexagonal, but it is an important feature of the present invention for the surface 65 to have a shape which facilitates assembly of the fan drive onto the drive shaft S. In the subject embodiment, and by way of example only, the assembly is achieved by means of a tool T which is illustrated in FIG. 3 as being a conventional open-end or box-end wrench, of the type normally used in turning a threaded member having an hexagonal head. Thus, what is shown in FIG. 3 are the upper and lower jaws or portions of the wrench, each portion being labelled "T". Also, as was mentioned in the BACKGROUND OF THE DISCLOSURE, there may be very little axial separation between the rearward surface 71 of the fan drive and an adjacent surface of the water pump from which the drive shaft S extends. In fact, with the present invention, the adjacent surface of the water pump (or other structure associated with the drive shaft S) could be disposed almost immediately adjacent the rearward end of the enlarged, annular portion 51, i.e., after the portion 51 is threaded all the way onto the external threads 69 of the drive shaft S. In such an application, only a fairly narrow tool T would fit within the available space (i.e., between the surface 71 and the water pump surface), and therefore, it is preferable to coordinate the axial length of the hexagonal outer surface 65 with the width of the tool T to be used for the assembly step. It would be within the ability of those skilled in the art to select another type of tool for the assembly step. One example would be a spanner wrench, in which case the outer surface 65 would be cylindrical, but would include a radially oriented opening into which the radially oriented projection of the spanner wrench would extend in a manner well known to those skilled in the tool art.

The invention has been described in great detail in the foregoing specification, and it is believed that various alterations and modifications of the invention will become apparent to those skilled in the art from a reading and understanding of the specification. It is intended that all such alterations and modifications are included in the invention, insofar as they come within the scope of the appended claims.

## Claims

1. A fluid coupling device adapted to be mounted on an externally-threaded drive shaft (S) and rotatably driven thereby, said drive shaft (S) providing the sole input drive to said fluid coupling device, said fluid coupling device being of the type comprising a first rotatable coupling assembly (13) defining an axis of rotation (A) and a fluid chamber (29,31); a second rotatable coupling member (11) disposed in said fluid chamber (29), and being rotatable relative to said first coupling assembly (13) and cooperating therewith to define a viscous shear space (47,49) therebetween, whereby torque is transmitted from said second coupling member to said first coupling assembly in response to the presence of viscous fluid in said viscous shear space (47,49); an input shaft (21) operable to transmit input torque from said drive shaft (S) to said second coupling member (11); said first coupling assembly (13) including a housing member (15) rotatably supported relative to said input shaft (21) by means of a bearing set, said input shaft including an internally-threaded portion in threaded engagement with said externally-threaded drive shaft (S); characterized by:
(a) said internally-threaded portion (51) of said input shaft (21) including a first exterior surface portion (53) on which is disposed said bearing set (55,57,59), and a second exterior portion (65) adapted for engagement by a tool (T) operable to effect threaded engagement of said internally-threaded portion (51) and said externally-threaded drive shaft (S).

2. A fluid coupling device as claimed in claim 1, characterized by said bearing set comprising an outer race (57) received within an inside surface (61) of said housing member (15), an inner race (55) disposed on said first exterior surface portion (53) of said input shaft (21), and a plurality of bearing members (59) disposed radially between said inner race (55) and said outer race (57).

3. A fluid coupling device as claimed in claim 2, characterized by said internally-threaded portion (51) defining a set of internal threads (67), said internal threads being disposed immediately adjacent a plane (P) defined by said plurality of bearing members (59).

4. A fluid coupling device as claimed in claim 1, characterized by said first rotatable coupling assembly (13) including enclosure means (17) cooperating with said housing member (15) to define said fluid chamber, and said device further including valve means (27,39) disposed to separate said fluid chamber into a fluid operating chamber (29) and a fluid reservoir chamber (31), said second coupling member (11) being disposed in said fluid operating chamber.

5. A fluid coupling device as claimed in claim 4, characterized by said valve means (27,39) being operable to control the flow of fluid between said reservoir chamber (31) and said operating chamber (29), and including control means (37,41) associated with said valve means (27,39) to effect operation thereof in response to variations in a predetermined condition.

6. A fluid coupling device as claimed in claim 5, characterized by said control means comprising a temperature-responsive bimetal element (41) and said predetermined condition comprises ambient air temperature.

7. A fluid coupling device as claimed in claim 1, characterized by said second exterior portion (65) being generally hexagonal, and said tool (T) comprises a wrench, said housing member (15) defining a rearward surface (71) and said second exterior portion (65) extending axially rearward of said rearward surface (71) a sufficient distance to permit said engagement by said wrench (T) with said second exterior portion (65).

8. A fluid coupling device as claimed in claim 7, characterized by a radially-extending flange (63) being disposed axially between said first exterior surface portion (53) and said second exterior portion (65), said flange (63) being operable to prevent substantial axial movement of said bearing set (55,57,59) rearwardly relative to said second exterior portion (65).
